# EUROPÄISCHE PATENTSCHRIFT

(11) **EP 0 816 224 B1**
(45) Veröffentlichungstag und Bekanntmachung des Hinweises auf die Patenterteilung: **13.06.2001**
(21) Anmeldenummer: 97111356.8
(22) Anmeldetag: 04.07.1997
(51) Int. Cl.: B64D 9/00, B64C 1/20

(54) **Funktionselement zum Einbau in einem Flugzeugdeck**
Functional component mounted in an aircraft floor panel
Elément fonctionnel monté dans le plancher d'un avion

(30) Priorität: 05.07.1996 DE 19627183; 10.07.1996 DE 19627846
(43) Veröffentlichungstag der Anmeldung: 07.01.1998
(73) Patentinhaber: Telair International GmbH, 83734 Hausham (DE)
(72) Erfinder: Huber, Thomas, 82393 Iffeldorf (DE)
(74) Vertreter: Bohnenberger, Johannes, Dr.

(56) Entgegenhaltungen:
- WO-A-95/30574
- FR-A- 2 315 442
- US-A- 3 357 371
- US-A- 3 507 226
- US-A- 5 090 639

## Beschreibung

Die Erfindung betrifft ein Funktionselement zum Einbau in ein Flugzeugdeck derart, daß das Funktionselement dann ein Teil des Flugzeugdecks bildet.

Flugzeuge werden sowohl zum Befördern von Fracht als auch zum Befördern von Passagieren verwendet. Ein und dieselbe Maschine kann z. B. tags zur Passagier- nachts zur Frachtbeförderung genutzt werden. Das Umrüsten von Passagier- zu Frachtbeförderung muß also möglichst schnell gehen. Noch extremer sind die Anforderungen an Maschinen für den militärischen Einsatz oder auch für Katastropheneinsatz. Hier wird ein und dieselbe Maschine sowohl zur Beförderung von Passagieren als auch zur Beförderung von genormten Containern oder aber auch zur Beförderung von Fahrzeugen verwendet. Ein Nebeneinander der verschiedenen Möglichkeiten kommt auch in Betracht.

Ein bekanntes System umfaßt Paletten mit darauf (fest) angebrachten Passagiersitzen, welche auf einem Frachtdeck befestigt werden können. Soll das Flugzeug zur Frachtbeförderung eingesetzt werden, entfernt man die Palette und gibt dadurch die auf dem Frachtdeck vorgesehenen üblichen Funktionseinheiten wie getriebene oder ungetriebene Rolleneinheiten, Riegelelemente oder dergleichen frei, so daß Paletten mit Fracht anstelle der Paletten mit Passagiersitzen befestigt werden können. Weiterhin ist es üblich, im Flugzeugdeck Befestigungsschienen anzuordnen, so daß entweder Passagiersitze oder aber die genannten Funktionselemente dort angebracht werden können. Beide Systeme sind relativ zeitaufwendig in der Handhabung. Für den Einsatz in militärisch oder für den Katastrophenschutz genutzten Maschinen, die auch Fahrzeuge aufnehmen müssen, sind beide Systeme kaum geeignet.

Der Erfindung liegt die Aufgabe zugrunde, ein Funktionselement zum Einbau in ein Flugzeugdeck aufzuzeigen, das eine variable Nutzung des Flugzeugdecks in einfacher und schnell umbaubarer Weise ermöglicht.

Diese Aufgabe wird durch ein Funktionselement nach dem Patentanspruch 1 gelöst.

Ein wesentlicher Punkt der Erfindung liegt darin, daß die Funktionseinheiten nicht eingebaut und ausgebaut werden müssen, sie sind vielmehr ständig im Deck vorhanden. Es sind lediglich wenige Handgriffe nötig, um ein gesamtes Flugzeugdeck von der einen Verwendungsform in die andere zu überführen.

Vorzugsweise sind Dichteinrichtungen vorgesehen, welche den Wendekörper, insbesondere seine Funktionsflächen in ihrer jeweils das Flugzeugdeck mitgestaltenden also nach oben gewandten Position gegenüber dem Flugzeugdeck abdichten. Dadurch ist gewährleistet, daß die Wendekörper auf Dauer funktionsfähig bleiben.

Vorzugsweise sind die Wendehalterungen derart ausgebildet, daß die Wendekörper um ihre Längsachse drehbar sind. Ansonsten sind die Wendekörper jedoch fest in der Ausnehmung angeordnet, sie sind also in keiner Richtung verschiebbar. Auf der einen Seite ist eine solche Halterung sehr einfach herstellbar, auf der anderen Seite ist gewährleistet, daß Halteelemente oder auch angetriebene Rolleneinheiten hohe Horizontal- oder auch Vertikalkräfte aufnehmen können.

Die Wendehalterungen umfassen bei einer bevorzugten Ausführungsform der Erfindung jeweils Antriebsmotoren, die vorzugsweise fernbedienbar sind, so daß man "auf Knopfdruck" den Wendekörper von seiner einen in eine andere Position bringen kann. Weiterhin sind Wendehalterungen mit vorzugsweise ferngesteuerten Verriegelungseinrichtungen zum Verriegeln des Wendekörpers mit dem Flugzeugdeck ausgestattet, was in einfacher Weise die Stabilität erhöht, da nicht alle Kräfte von den Lagern der Wendekörper aufgenommen werden müssen. Diese Verriegelungseinrichtungen können zusätzlich im Antriebsmotor vorgesehen sein. Der Antriebsmotor kann auch mit einem selbsthemmendem Getriebe ausgestattet sein, welches diese Sperre sicherstellt.

Jede Wendehalterung ist vorzugsweise mit einem Kanal ausgestattet, der derart ausgebildet und zum Wendekörper hin offen ist, daß Steuer- und Versorgungsleitungen von außen durch die Wendehalterung zu entsprechenden Funktionseinheiten, z. B. einer Rollenantriebseinheit im Wendekörper geführt werden können. Weiterhin sind die Wendehalterungen vorzugsweise derart aufgebaut, daß eine ganze Reihe von Wendekörpern im wesentlichen direkt aneinander anstoßend im Flugzeugdeck montierbar sind, wobei die Wendehalterung zusammen mit den hohlen Wendekörpern einen Installationskanal für elektrische oder hydraulische Leitungen bilden.

Nachfolgend wird eine bevorzugte Ausführungsform der Erfindung anhand von Abbildungen näher erläutert. Hierbei zeigen:
- Fig. 1: einen stark schematisierten Teil-Querschnitt durch einen Flugzeugrumpf,
- Fig. 2: eine perspektivische Ausschnittsdarstellung eines Decks mit Funktionselementen,
- Fig. 3: einen schematisierten Querschnitt durch ein im Deck eingebautes Funktionselement während einer Umpositionierung von einer Funktionsfläche zur anderen, und
- Fig. 4: einen Teil-Längsschnitt durch zwei aneinander grenzende Funktionselemente.

In der nachfolgenden Beschreibung werden für gleiche und gleichwirkende Teile dieselben Bezugsziffern verwendet.

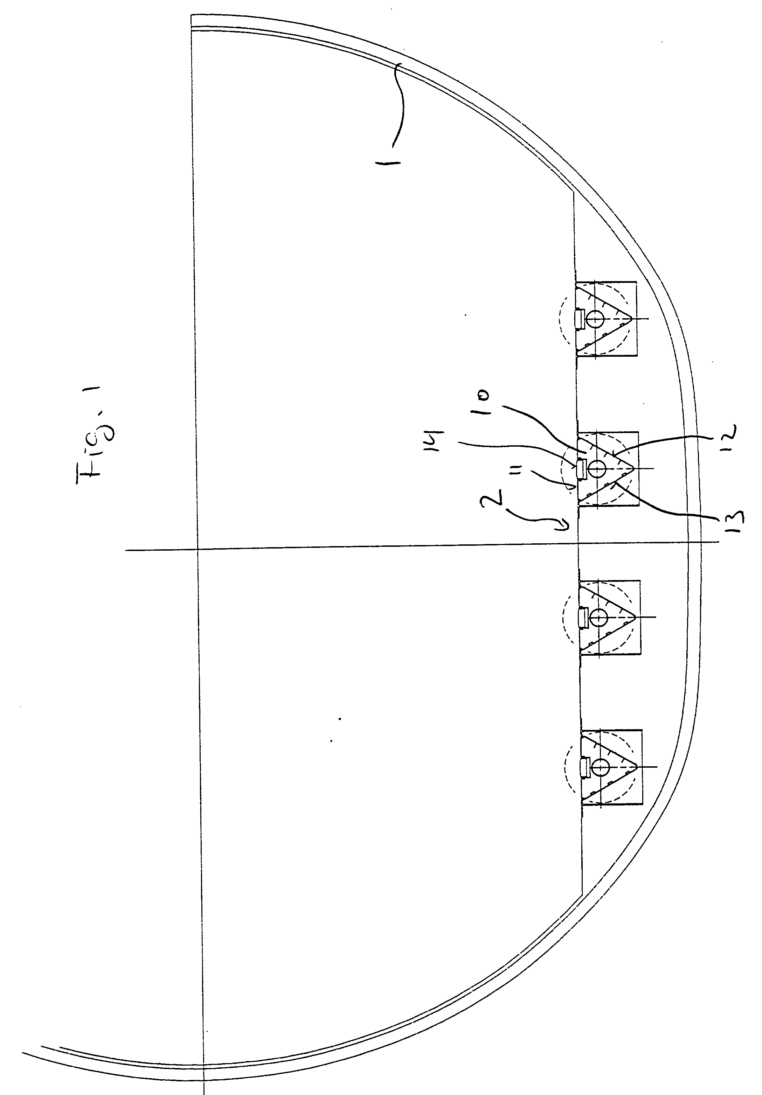

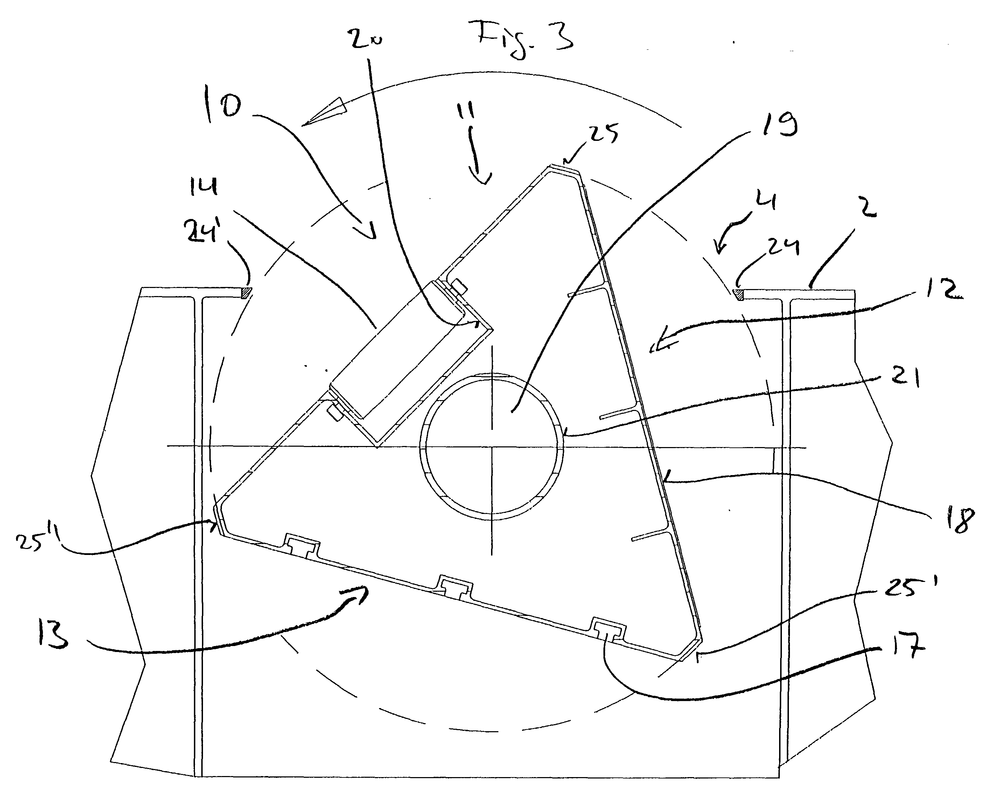

In Fig. 1 ist in stark schematisierter Darstellung und zur Verdeutlichung auch in unkorrekten Maßstabsverhältnissen ein Querschnitt durch einen Rumpf 1 eines Flugzeugs gezeigt, in dessen unterem Bereich sich ein Deck 2 befindet. Im Deck 2 sind in Reihen nebeneinander Funktionselemente befestigt, welche Wendekörper 10 mit (bei diesem Ausführungsbeispiel) dreieckigem Querschnitt aufweisen. Die Wendekörper 10 weisen erste bis dritte Funktionsflächen 11 bis 13 entsprechend ihrem dreieckigen Querschnitt auf, die unterschiedlich ausgestaltet sind. Dies geht besonders deutlich aus Fig. 3 hervor, nach welcher die im Flugzeugdeck 2 montierten Wendekörper 10 ihrer ersten Funktionsfläche 11 Förderrollen 14 montiert aufweisen, während die zweite Funktionsfläche 12 eine (befahrbare) glatte Lauffläche 18 aufweist. Die dritte Funktionsfläche 13 ist mit Befestigungsschienen 17 zum Anbauen von anderen Funktionseinheiten, z. B. von Passagiersitzen oder Verzurrungselementen versehen.

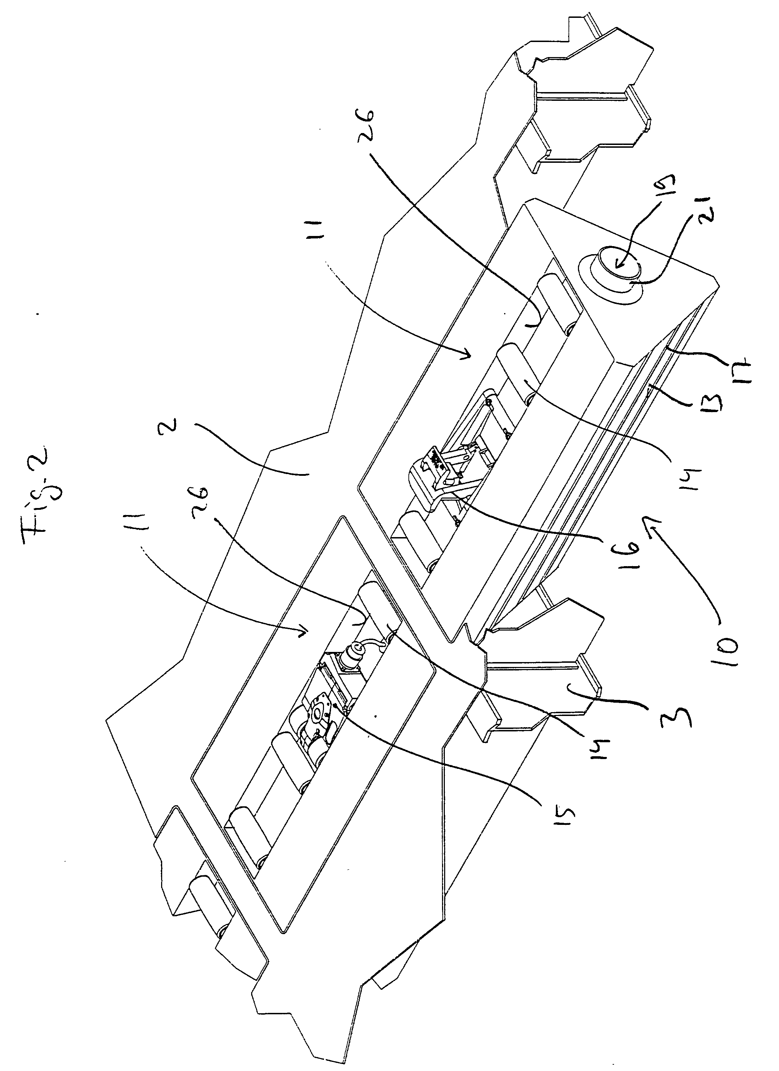

Wie aus Fig. 2 besonders deutlich hervorgeht, sind die ersten Funktionsflächen 11 vorzugsweise mit einem Kanal 26 ausgestattet, wie dies für Flugzeugdecks allgemein bekannt ist. In diesem Kanal 26 kann nun ein Riegelelement 16 mit davor und danach angeordneten (passiven) Förderrollen 14 oder eine Rollenantriebseinheit 15 zusammen mit entsprechenden Förderrollen 14 vorgesehen sein, wie dies in Fig. 2 gezeigt ist. Selbstverständlich ist es auch möglich, ausschließlich solche Förderrollen 14 im Kanal 26 anzuordnen.

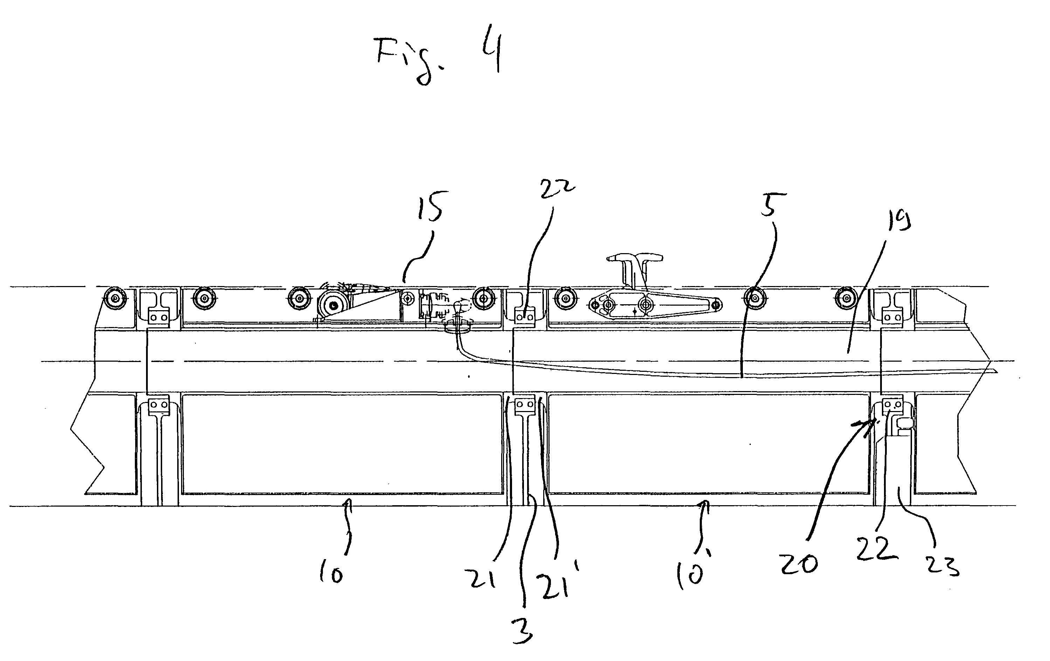

Die Wendekörper 10 sind, wie dies in Fig. 4 deutlicher gezeigt ist, mit Zapfen 21, 21' an ihren Enden versehen, welche in Lagern 22 in Spanten 3 des Decks 2 gehalten sind. Die Zapfen 21, 21' bilden zusammen mit den Lagern 22 Wendehalterungen 20, über welche die Wendekörper 10 gedreht werden können. Weiterhin ist, wie in Fig. 4 gezeigt, ein Verdrehmotor 23 zum Verdrehen der Wendekörper 10 vorgesehen, der zusätzlich Verriegelungseinrichtungen aufweist, um die Wendekörper 10 in ihren jeweils gewünschten Positionen zu halten. Die Lagerzapfen 21, 21' sind rohrförmig ausgebildet und weisen in ihrem Inneren einen Kanal 19 auf, der sich im Wendekörper 10 fortsetzt, so daß Steuerleitungen 5 zum Steuern bzw. zur Energieversorgung z. B. einer Rollenantriebseinheit 15 hindurchgeführt werden können. Bei der hier gezeigten Ausführungsform der Erfindung sind die Zapfen 21, 21' so ausgebildet, daß jeweils der eine Zapfen 21 eines ersten Wendekörpers 10 den direkt darauffolgenden Zapfen 21' eines zweiten Wendekörpers 10' aufnimmt, so daß ein einziges Lager 22 ausreichend ist, um zwei Wendekörper an einer Seite zu lagern, wie dies in Fig. 4 gezeigt ist.

Wenn die Wendekörper 10 von einer Position in eine andere verbracht werden sollen, wie dies in Fig. 3 angedeutet ist, so werden sie um ihre Längsachse gedreht. Haben sie ihre Endposition erreicht, so sind Dichtflächen 25, 25', 25" in Eingriff mit elastisch ausgebildeten Dichtlippen 24, 24', welche am Längsrand von Ausnehmungen 4 sitzen, in welchen sich die Wendekörper 10 befinden.

In der obigen Beschreibung wurden Wendekörper mit dreieckigem Querschnitt vorgestellt. Es ist selbstverständlich auch möglich, Wendekörper mit nur zwei oder aber auch mit mehr als drei Funktionsflächen auszustatten, wenn dies gewünscht sein sollte.

### Bezugszeichenliste

- 1: Rumpf
- 2: Deck
- 3: Spant
- 4: Ausnehmung
- 5: Steuerleitung
- 10: Wendekörper
- 11: erste Funktionsfläche
- 12: zweite Funktionsfläche
- 13: dritte Funktionsfläche
- 14: Förderrolle
- 15: Rollenantriebseinheit
- 16: Riegelelement
- 17: Befestigungsschiene
- 18: Lauffläche
- 19: Kanal
- 20: Wendehalterung
- 21, 21': Zapfen
- 22: Lager
- 23: Verdrehmotor
- 24, 24': Dichtlippe
- 25, 25', 25": Dichtfläche
- 26: Kanal

## Patentansprüche

1. Funktionselement zum Einbau in ein Flugzeugdeck, umfassend
einen Wendekörper (10) mit mindestens zwei Funktionsflächen (11, 12, 13), die voneinander verschiedene, an sich bekannte Funktionseinheiten wie aktive oder passive Rolleneinheiten (14, 15), Riegelelemente (16), Befestigungsschienen (17),'Laufflächen (18) oder dergleichen aufweisen,
eine Wendehalterung (20), die derart ausgebildet und in einer Ausnehmung (4) des Flugzeugdecks (2) montierbar ist, daß der Wendekörper (20) im montierten Zustand in der Ausnehmung (4) aufgenommen und wahlweise mit einer seiner mindestens zwei Funktionsflächen (11, 12, 13) das Flugzeugdeck (2) bildend oder mitgestaltend fixierbar ist.

2. Funktionselement nach Anspruch 1,
**dadurch gekennzeichnet**, daß Dichteinrichtungen (24) vorgesehen sind, welche den Wendekörper (10), insbesondere seine Funktionsflächen (11, 12, 13) in ihrer jeweils das Flugzeugdeck (2) mitgestaltenden, nach oben gewandten Position gegenüber dem Flugzeugdeck (2) abdichten.

3. Funktionselement nach einem der vorhergehenden Ansprüche,
**dadurch gekennzeichnet**, daß die Wendehalterung (20) derart ausgebildet ist, daß der Wendekörper (10) um eine Achse drehbar aber ansonsten fest in der Ausnehmung (4) angeordnet ist.

4. Funktionselement nach einem der vorhergehenden Ansprüche,
**dadurch gekennzeichnet**, daß die Wendehalterung (20) einen Antriebsmotor (23) zum vorzugsweise ferngesteuerten Wenden des Wendekörpers (10) aufweist.

5. Funktionselement nach einem der vorhergehenden Ansprüche,
**dadurch gekennzeichnet**, daß die Wendehalterung (20) eine vorzugsweise ferngesteuerte Verriegelungseinrichtung zum Verriegeln des Wendekörpers (10) mit dem Flugzeugdeck (2) aufweist.

6. Funktionselement nach den Ansprüchen 4 und 5,
**dadurch gekennzeichnet**, daß die Verriegelungseinrichtung mit dem Antriebsmotor (23) zum Wenden der Wendehalterung (20) gebildet ist.

7. Funktionselement nach einem der vorhergehenden Ansprüche,
**dadurch gekennzeichnet**, daß
die Wendehalterung (20) einen Kanal (19) umfaßt, der derart ausgebildet und zum Wendekörper (10) offen ist, daß Steuer- und Versorgungsleitungen (5) von außen durch die Wendehalterung (20) zu den Funktionseinheiten (15) im Wendekörper (10) führbar sind.

8. Funktionselement nach einem der vorhergehenden Ansprüche,
**dadurch gekennzeichnet**, daß
eine der Funktionsflächen einen Kanal (26) aufweist, in welchem Funktionselemente, insbesondere Riegelelemente (16), Rollenantriebseinheiten (15), Förderrollen (14) oder dergleichen montierbar sind.

9. Funktionselement nach einem der vorhergehenden Ansprüche,
**dadurch gekennzeichnet**, daß
der Wendekörper als Strangpreßprofil ausgebildet ist.

## Claims

1. A functional element for installation in an aircraft deck, comprising a turning member (10) having at least two functional surfaces (11,12,13) which have per se known functional units which are different from one another, such as active or passive roller units (14,15), locking elements (16), mounting rails (17), running surfaces (18) or the like, a turning mount (20) which is so designed and can be installed in a recess (4) in the aircraft deck (2) that in its installed condition the turning member (20) [sic] is accommodated in the recess (4) and can optionally be secured with its at least two functional surfaces (11,12,13) so as to form or define therewith the aircraft deck (2).

2. A functional element according to Claim 1, characterised in that sealing means (24) are provided which seal the turning member (10), in particular its functional surfaces (11,12,13), in their respective upwardly turned position defining therewith the aircraft deck (2) with respect to the aircraft deck (2).

3. A functional element according to one of the preceding Claims, characterised in that the turning mount (20) is so formed that the turning member (10) is arranged to be rotatable about an axis but otherwise is secured in the recess (4).

4. A functional element according to any one of the preceding Claims, characterised in that the turning mount (20) has a drive motor (23) for the preferably remote-controlled turning of the turning member (10).

5. A functional element according to any one of the preceding Claims, characterised in that the turning mount (20) has a preferably remote-controlled locking device for locking the turning member (10) to the aircraft deck (2).

6. A functional element according to Claims 4 and 5, characterised in that the locking device is formed with the drive motor (23) for turning the turning mount (20).

7. A functional element according to any one the preceding Claims, characterised in that the turning mount (20) comprises a conduit (19) which is so designed and is open towards the turning member (10) that control and supply lines (5) can be passed from the exterior through the turning mount (20) to the functional units (15) in the turning member (10).

8. A functional element according to any one of the preceding Claims, characterised in that one of the functional surfaces has a channel (26) in which functional elements, in particular, bolt elements (16), roller drive units (15), conveying rollers (14) or the like, can be installed.

9. A functional element according to any one of the preceding Claims, characterised in that the turning member is in the form of an extrusion.

## Revendications

1. Elément fonctionnel destiné à être monté dans un pont d'un avion, comprenant :
un corps pivotant (10) avec au moins deux surfaces fonctionnelles (11, 12, 13) qui comportent des unités fonctionnelles connues, différentes les unes des autres, telles que des unités à rouleaux actives ou passives (14, 15), des éléments à verrou (16), des rails de fixation (17), des surfaces de roulement (18) ou similaires,
un support pivotant (20) qui est conçu et qui peut être monté dans un évidement (4) du pont (2) de l'avion de manière qu'à l'état monté, le corps pivotant (20) soit logé dans l'évidement (4) et puisse être fixé au choix par l'une de ses surfaces fonctionnelles (11, 12, 13) au moins au nombre de deux, de manière à constituer ou à participer à la formation du pont d'avion (2).

2. Elément fonctionnel selon la revendication 1,
caractérisé en ce que sont prévus des dispositifs d'étanchéité (24) qui rendent étanche, par rapport au pont d'avion (2), le corps pivotant (10), notamment ses surfaces fonctionnelles (11, 12, 13) dans leur position tournée vers le haut, qui participe à la formation du pont d'avion (2).

3. Elément fonctionnel selon l'une des revendications précédentes, caractérisé en ce que le support pivotant (20) est conçu de manière que le corps pivotant (10) puisse tourner autour d'un axe, mais soit sinon disposé fixement dans l'évidement (4).

4. Elément fonctionnel selon l'une des revendications précédentes, caractérisé en ce que le support pivotant (20) comporte un moteur d'entraînement (23) pour le retournement, de préférence télécommandé, du corps pivotant (10).

5. Elément fonctionnel selon l'une des revendications précédentes, caractérisé en ce que le support pivotant (20) comporte un dispositif de verrouillage, de préférence télécommandé, pour le verrouillage du corps pivotant (10) avec le pont d'avion (2).

6. Elément fonctionnel selon les revendications 4 et 5, caractérisé en ce que le dispositif de verrouillage est formé avec le moteur d'entraînement (23) pour le retournement du support pivotant (20).

7. Elément fonctionnel selon l'une des revendications précédentes, caractérisé en ce que le support pivotant (20) comprend un canal (10) qui est conçu et ouvert vers le corps pivotant (10), de manière que des lignes de commande et d'alimentation (5) puissent passer de l'extérieur, à travers le support pivotant (20) vers les unités fonctionnelles (15) dans le corps pivotant (10).

8. Elément fonctionnel selon l'une des revendications précédentes, caractérisé en ce que l'une des surfaces fonctionnelles présente un canal (26) dans lequel peuvent être montés des éléments fonctionnels, notamment des éléments à verrou (16), des unités d'entraînement à rouleaux (15), des rouleaux de transport (14) ou similaires.

9. Elément fonctionnel selon l'une des revendications précédentes, caractérisé en ce que le corps pivotant est réalisé sous la forme d'un profilé extrudé.
